# FASCICULE DE BREVET EUROPEEN

(11) **EP 4 086 550 B1**
(45) Date de publication et mention de la délivrance du brevet: **20.12.2023**
(21) Numéro de dépôt: 22166798.3
(22) Date de dépôt: 05.04.2022
(51) Int. Cl.: F25J 3/02

(54) **PROCÉDÉ ET APPAREIL DE SÉPARATION D'UN MÉLANGE D' HYDROGÈNE ET DE MONOXYDE DE CARBONE À BASSE TEMPÉRATURE**
VERFAHREN UND VORRICHTUNG ZUR TRENNUNG EINES GEMISCHES AUS WASSERSTOFF UND KOHLENMONOXID BEI NIEDRIGER TEMPERATUR
METHOD AND DEVICE FOR SEPARATING A MIXTURE OF HYDROGEN AND CARBON MONOXIDE AT LOW TEMPERATURE

(30) Priorité: 04.05.2021 FR 2104698
(43) Date de publication de la demande: 09.11.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: DEMOLLIENS, Bertrand, 94503 Champigny sur Marne (FR); HERNANDEZ, Antoine, 94503 Champigny sur Marne (FR)
(74) Mandataire: Air Liquide

(56) Documents cités:
- DE-A1- 4 210 638
- FR-A1- 2 872 890
- US-A- 3 691 779
- US-A1- 2018 058 757

## Description

La présente invention est relative à un procédé et à un appareil de séparation d'un mélange d'hydrogène et de monoxyde de carbone à basse température. Il concerne en particulier la séparation par distillation et/ou lavage et/ou condensation partielle à des températures en dessous de -100°C.

Le mélange à séparer contient de préférence au moins 10% mol d'hydrogène, voire au moins 30% mol d'hydrogène.

Le mélange peut être un gaz de synthèse et peut contenir en plus de l'hydrogène et du monoxyde de carbone au moins un des composants suivants : dioxyde de carbone, azote, méthane, de l'eau.

Comme impuretés additionnelles, il peut contenir au moins un des composants suivants : un sulfure, un cyanure, de l'ammoniac, au moins un hydrocarbure plus lourd que le méthane.

Les procédés de condensation partielle et les procédés de lavage sont particulièrement efficaces à des pressions élevées donc si le mélange à séparer est à pression élevée, il est intéressant d'effectuer la séparation par condensation partielle ou par lavage à la pression élevée, sans détendre le mélange. Ceci permet de produire de l'hydrogène à une pression légèrement en dessous celle du mélange.

Par exemple dans le cas des gazéifieurs à charbon pulvérisé, un mélange d'hydrogène et de monoxyde de carbone à 60 bars est produit, permettant la production d'hydrogène par condensation partielle et/ou lavage à environ 56 bars.

Il est connu de DE4210638 et FR3021044 de séparer l'hydrogène produit à basse température par adsorption dans un appareil PSA qui est un appareil d'adsorption modulée en pression.

Considérons le cas où l'hydrogène est requis à 28 bars pour une canalisation et à 8 bars pour un client. Dans ce cas, l'hydrogène sera produit à la pression la plus élevée pour éviter d'utiliser deux appareils PSA.

L'appareil d'adsorption à pression modulée PSA opère de préférence à environ 30 bars pour deux raisons :
- La pression de 30 bars représente un optimum pour cette technologie : avec une pression plus élevée le rendement en hydrogène réduirait alors qu'avec une pression moins élevée, la pression du produit ne serait pas atteinte.
- Les vannes d'un PSA doivent fonctionner à une pression d'environ 35 bars pour que les vannes restent dans la gamme de 300 psi maximum, une pression plus élevée nécessitant des vannes bien plus chères.

Un appareil adsorption à pression modulée (APM), appelée aussi d'adsorption par inversion de pression ou PSA (acronyme de l'anglais *Pressure Swing Adsorption*) opère par un procédé de séparation de mélanges de gaz au cours duquel ont lieu alternativement l'adsorption d'un gaz par un solide ou un liquide à une pression donnée, puis sa désorption à une pression plus faible¹.

Il consiste à retirer un gaz d'un mélange gazeux, en utilisant son affinité chimique et ses caractéristiques particulières vis-à-vis d'un matériau solide, l'adsorbant étant exposé à une oscillation de pression rigoureusement contrôlée. Une adsorption sélective se produit grâce à des capacités d'équilibre différentes (*adsorbant d'équilibre*) ou par des différences dans les taux d'adsorption (*adsorbant cinétique*)²*.*

Si l'hydrogène est produit à 56 bars, ceci nécessite de détendre l'hydrogène en amont de l'adsorption en plus de détendre le produit requis à 8 bars.

Le but de la présente invention est d'intégrer l'appareil d'adsorption à pression modulée avec l'appareil de séparation à basse température afin d'utiliser la détente d'hydrogène pour fournir du froid à la séparation à basse température.

US3691779 décrit l'intégration d'un appareil de séparation par condensation partielle et un appareil d'adsorption opérant à entre -184°C et -162°C. Une partie de l'hydrogène produit par l'adsorption sert à produire du froid pour l'appareil de séparation par détente dans une turbine jusqu'à 2,4 bars et ensuite sert à régénérer l'appareil d'adsorption.

Selon un objet de l'invention, il est prévu un procédé de séparation d'un mélange contenant de l'hydrogène et du monoxyde de carbone pour produire de l'hydrogène gazeux dans lequel :
i) Le mélange est refroidi dans un échangeur de chaleur jusqu'à une température en dessous de -180°C et puis séparé à une température en dessous de -100°C par au moins une étape de condensation partielle et/ou distillation et/ou lavage pour produire un gaz enrichi en hydrogène et un fluide enrichi en monoxyde de carbone,
ii) Au moins une partie du gaz enrichi en hydrogène est envoyée à un appareil de séparation par adsorption modulée en pression opérant à une température au-dessus de 0°C pour produire un gaz riche en hydrogène à une pression d'au moins 20 bars et
iii) Au moins une partie du gaz riche en hydrogène est refroidie dans l'échangeur de chaleur jusqu'à une température en dessous de -100°C, détendue dans une turbine jusqu'à une pression d'au moins 8 bars et réchauffée dans l'échangeur de chaleur pour constituer un produit riche en hydrogène à au moins 8 bars.

Selon d'autres aspects facultatifs :
- l'au moins une partie du gaz enrichi en hydrogène se réchauffe dans l'échangeur de chaleur en amont de l'appareil de séparation par adsorption.
- le gaz enrichi en hydrogène de l'étape ii) est à au moins 51 bars, le gaz riche en hydrogène est produit par l'appareil de séparation par adsorption à au moins 50 bars et il est détendu par la turbine jusqu'à une pression d'au moins 20 bars.
- le gaz riche en hydrogène détendu jusqu'à une pression d'au moins 20 bars est divisé en deux et seulement une partie du gaz est détendue en aval de son réchauffement dans l'échangeur jusqu'à une pression d'au plus 12 bars.
- le gaz enrichi en hydrogène de l'étape ii) est à entre 28 et 32 bars, le gaz riche en hydrogène est produit par l'appareil de séparation par adsorption à entre 27 et 31 bars et il est détendu au moins en partie jusqu'à une pression d'au plus 12 bars par la turbine.
- le gaz détendu jusqu'à une pression d'au plus 12 bars constitue le produit riche en hydrogène du procédé.
- le mélange refroidi dans l'échangeur de chaleur est à au moins 50 bars.
- le mélange est séparé dans une première étape de condensation partielle, le gaz de la première étape de condensation partielle se refroidit et est envoyé à une deuxième étape de condensation partielle et le gaz riche en hydrogène détendu dans la turbine se réchauffe par échange de chaleur avec le gaz de la première étape de condensation partielle qui se refroidit.
- la température en entrée de la deuxième condensation partielle est inférieure à -200°C, voire à -203°C.
- un débit enrichi en hydrogène d'une source extérieure est séparé également dans l'appareil de séparation par adsorption modulée en pression, éventuellement de sorte que le débit détendu dans la turbine est supérieur au débit de gaz enrichi en hydrogène séparé à la température en dessous de -100°C.
- la température du gaz en sortie de turbine est inférieure à -200°C, voire à -203°C.

Selon un objet de l'invention, il est prévu un appareil de séparation d'un mélange contenant de l'hydrogène et du monoxyde de carbone pour produire de l'hydrogène gazeux comprenant une unité de séparation où s'effectue au moins une étape de condensation partielle et/ou distillation et/ou lavage, un échangeur de chaleur, un appareil de séparation par adsorption modulée en pression (PSA), une turbine, des moyens pour envoyer le mélange se refroidir dans l'échangeur de chaleur jusqu'à une température en dessous de -180°C , des moyens pour envoyer le mélange refroidi se séparer à une température en dessous de -100°C par au moins une étape de condensation partielle et/ou par distillation et/ou par lavage dans l'unité de séparation pour produire un gaz enrichi en hydrogène et un fluide enrichi en monoxyde de carbone, des moyens pour envoyer au moins une partie du gaz enrichi en hydrogène au appareil de séparation par adsorption modulée en pression opérant à une température au-dessus de 0°C pour produire un gaz riche en hydrogène à une pression d'au moins 20 bars, des moyens pur envoyer au moins une partie du gaz riche en hydrogène se refroidir dans l'échangeur de chaleur jusqu'à une température en dessous de -100°C, ensuite se détendre dans la turbine jusqu'à une pression d'au moins 8 bars et des moyens pour envoyer le gaz détendu se réchauffer dans l'échangeur de chaleur pour constituer un produit riche en hydrogène à au moins 8 bars.

L'invention sera décrite de manière plus détaillée en se référant aux deux figures.
[FIG. 1] représente un procédé selon l'invention.
[FIG. 2] représente un procédé selon l'invention.

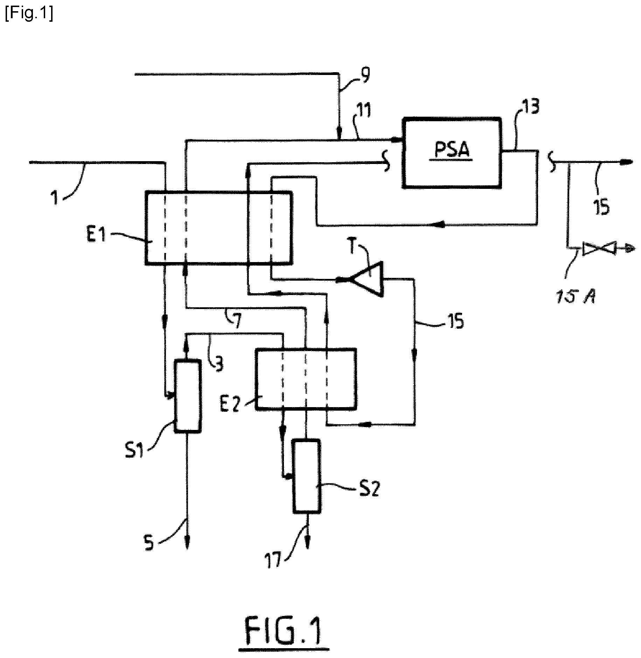

[FIG. 1] représente un procédé dans lequel l'appareil de séparation par adsorption à pression modulée PSA reçoit un débit riche en hydrogène 7, 11 à environ 55 bars. L'hydrogène purifié par adsorption 13 est à environ 54 bars et peut être détendu pour fournir du froid au procédé de séparation à basse température. Cet hydrogène est renvoyé à l'enceinte isolée thermiquement d'où il provient et y est détendu pour contribuer à la production de frigories et à réduire la consommation d'énergie. Etant donné que le gaz est très pur en hydrogène, il peut détendu jusqu'à une température très basse, par exemple -204°C. Ceci permet d'effectuer la séparation d'hydrogène dans l'enceinte à une température plus basse et d'améliorer le rendement en monoxyde de carbone et, le cas échéant, en méthane.

L'enceinte contient les échangeurs de chaleur E1, E2 et les séparateurs de phases S1, S2.

Le débit de gaz de synthèse 1 à 56 bars contient du monoxyde de carbone et de l'hydrogène, de préférence au moins 10% mol d'hydrogène, voire au moins 30% mol d'hydrogène.

Le mélange 1 peut contenir en plus de l'hydrogène et du monoxyde de carbone au moins un des composants suivants : dioxyde de carbone, azote, méthane, de l'eau.

Comme impuretés additionnelles, il peut contenir au moins un des composants suivants : un sulfure, un cyanure, de l'ammoniac, au moins un hydrocarbure plus lourd que le méthane.

L'eau et le dioxyde de carbone devront être enlevés avant le traitement à basse température.

Le débit 1 se refroidit dans l'échangeur de chaleur E1 et s'y condense partiellement avant d'être envoyé à un séparateur de phases S1 à -180°C. Le liquide produit 5 peut être envoyé à un traitement à basse température par exemple par distillation et/ou lavage et/ou condensation partielle à des températures en dessous de -100°C. Le traitement cryogénique peut comprendre entre autre un lavage au méthane, un lavage au monoxyde de carbone ou une distillation pour séparer le monoxyde de carbone et le méthane, si le débit 1 en contient.

Le gaz 3 du séparateur S1 est refroidi dans un échangeur E2 pour la condenser partiellement à une température plus basse et est envoyé à un séparateur de phase S2. Le liquide produit 17 peut être envoyé à un traitement à basse température par exemple par distillation et/ou lavage et/ou condensation partielle à des températures en dessous de -100°C. Le traitement cryogénique peut comprendre entre autre un lavage au méthane, un lavage au monoxyde de carbone ou une distillation pour séparer le monoxyde de carbone et le méthane, si le débit 1 en contient.

Le gaz 7 du séparateur S2, enrichi en hydrogène se réchauffe dans les échangeurs E2, E1 et est éventuellement mélangé à une température au -dessus de 0°C avec un débit 9 de gaz enrichi en hydrogène provenant d'une unité de shift.

Le gaz 7 à 55 bars alimente une unité de séparation par d'adsorption à pression modulée PSA où il est séparé pour former un gaz riche en hydrogène 13 à 54 bars. Ce gaz 13 est renvoyé à l'enceinte qui contient les échangeurs E1, E2 et les séparateurs S1, S2 sans avoir besoin d'être épuré en dioxyde de carbone et en eau.

Le gaz 13 se refroidit dans l'échangeur de chaleur E1 puis est détendu dans une turbine T jusqu'à une température de -204°C pour produire du froid. Le débit détendu 15 à 29 bars se réchauffe dans les échangeurs E2, E1 et sert ensuite comme produit. Une partie 15A du produit peut être détendue jusqu'à au plus 12 bars, par exemple au plus 8 bars dans une vanne pour former un produit basse pression.

S'il y a un apport 9 d'hydrogène d'une autre source, le débit 13, 15 peut être supérieur au débit 7. Si l'apport 9 contient de l'eau et/ou du dioxyde de carbone, ceux-ci devront être enlevés du débit 13 en amont du refroidissement à basse température.

La détente dans la turbine T constitue le seul apport de froid pour le procédé de séparation à basse température, à part la détente Joule-Thomson dans des vannes.

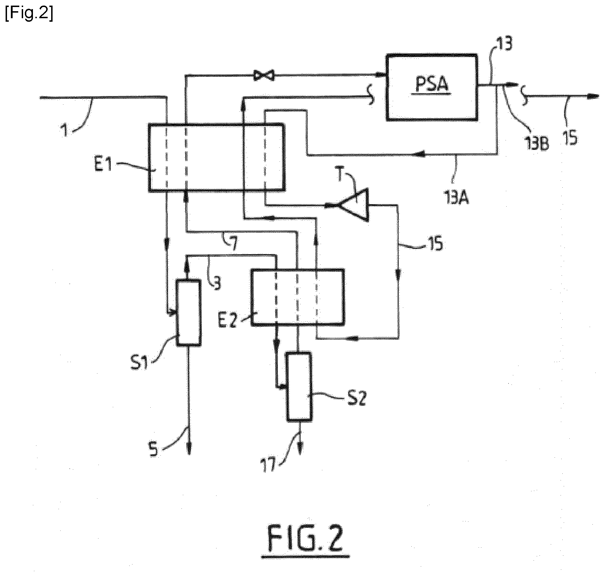

[FIG. 2] représente un procédé dans lequel l'appareil de séparation par adsorption à pression modulée PSA reçoit un débit 11 à pression plus basse que celle de la [FIG.1] car le débit 7 a été détendu jusqu'à entre 28 et 32 bars, ici 29 bars en amont de l'appareil d'adsorption PSA, afin de permettre à celui-ci de fonctionner à une pression proche de sa pression optimale. L'appareil d'adsorption PSA produit un gaz riche en hydrogène à entre 27 et 31 bars, ici 28 bars. Une partie 13B du produit à 28 bars est envoyée directement au client et le reste 13A se refroidit dans l'échangeur de chaleur E1 puis est détendu de 28 bars à 8 bars dans une turbine T jusqu'à une température de -204°C pour produire du froid. Le débit détendu 15 à 8 bars se réchauffe dans les échangeurs E2, E1 et sert ensuite comme produit.

Ainsi le procédé produit deux débits d'hydrogène à deux pressions, une étant la pression optimale pour l'adsorption et l'autre étant une pression plus basse que la pression optimale. La différence entre les deux pressions correspond à la détente dans la turbine T.

Le reste du procédé correspond à celui décrit pour la [FIG. 1] traitant un gaz de synthèse 1 à 56 bars.

## Revendications

1. Procédé de séparation d'un mélange (1) contenant de l'hydrogène et du monoxyde de carbone pour produire de l'hydrogène gazeux dans lequel :
i) Le mélange est refroidi dans un échangeur de chaleur (E1) jusqu'à une température en dessous de -180°C et puis séparé à une température en dessous de -100°C par au moins une étape de condensation partielle et/ou distillation et/ou lavage pour produire un gaz enrichi en hydrogène (7) et un fluide enrichi en monoxyde de carbone (17),
ii) Au moins une partie du gaz enrichi en hydrogène est envoyée à un appareil de séparation par adsorption modulée en pression (PSA) opérant à une température au-dessus de 0°C pour produire un gaz riche en hydrogène (13) à une pression d'au moins 20 bars et
iii) Au moins une partie (13A, 13) du gaz riche en hydrogène est refroidie dans l'échangeur de chaleur jusqu'à une température en dessous de -100°C, **caractérisé en ce que** l'au moins une partie du gaz riche en hydrogène refroidie est détendue
dans une turbine (T) jusqu'à une pression d'au moins 8 bars et réchauffée dans l'échangeur de chaleur pour constituer un produit riche en hydrogène (15, 15A) à au moins 8 bars.

2. Procédé selon la revendication 1 dans lequel l'au moins une partie du gaz enrichi en hydrogène (7) se réchauffe dans l'échangeur de chaleur (E1) en amont de l'appareil de séparation par adsorption (PSA).

3. Procédé selon la revendication 1 ou 2 dans lequel, le gaz enrichi en hydrogène (7) de l'étape ii) est à au moins 51 bars, le gaz riche en hydrogène (13) est produit par l'appareil de séparation par adsorption (PSA) à au moins 50 bars et il est détendu par la turbine jusqu'à une pression d'au moins 20 bars.

4. Procédé selon la revendication 3 dans lequel le gaz riche en hydrogène détendu jusqu'à une pression d'au moins 20 bars est divisé en deux et seulement une partie (15A) du gaz est détendue en aval de son réchauffement dans l'échangeur jusqu'à une pression d'au plus 12 bars.

5. Procédé selon la revendication 1 ou 2 dans lequel le gaz enrichi en hydrogène (7) de l'étape ii) est à entre 28 et 32 bars, le gaz riche en hydrogène (13) est produit par l'appareil de séparation par adsorption (PSA) à entre 27 et 31 bars et il est détendu au moins en partie jusqu'à une pression d'au plus 12 bars par la turbine (T).

6. Procédé selon la revendication 5 dans lequel le gaz détendu jusqu'à une pression d'au plus 12 bars constitue le produit riche en hydrogène (15) du procédé.

7. Procédé selon l'une des revendications précédentes dans lequel le mélange (1) refroidi dans l'échangeur de chaleur (E1) est à au moins 50 bars.

8. Procédé selon l'une des revendications précédentes dans lequel le mélange (1) est séparé dans une première étape de condensation partielle, le gaz (3) de la première étape de condensation partielle se refroidit et est envoyé à une deuxième étape de condensation partielle et le gaz riche en hydrogène (15) détendu dans la turbine (T) se réchauffe par échange de chaleur avec le gaz de la première étape de condensation partielle qui se refroidit.

9. Procédé selon la revendication 8 dans lequel la température en entrée de la deuxième condensation partielle est inférieure à -200°C, voire à -203°C.

10. Procédé selon l'une des revendications précédentes dans lequel un débit (9) enrichi en hydrogène d'une source extérieure est séparé également dans l'appareil de séparation par adsorption modulée en pression (PSA), éventuellement de sorte que le débit détendu (15) dans la turbine (T) est supérieur au débit de gaz (7) enrichi en hydrogène séparé à la température en dessous de -100°C.

11. Procédé selon l'une des revendications précédentes dans lequel la température du gaz (15) en sortie de turbine (T) est inférieure à -200°C, voire à - 203°C.

12. Appareil de séparation d'un mélange (1) contenant de l'hydrogène et du monoxyde de carbone pour produire de l'hydrogène gazeux comprenant une unité de séparation où s'effectue au moins une étape de condensation partielle et/ou distillation et/ou lavage (S1, S2), un échangeur de chaleur (E1), un appareil de séparation par adsorption modulée en pression (PSA), des moyens pour envoyer le mélange se refroidir dans l'échangeur de chaleur (E1) jusqu'à une température en dessous de -180°C , des moyens pour envoyer le mélange refroidi se séparer à une température en dessous de -100°C par au moins une étape de condensation partielle et/ou par distillation et/ou par lavage dans l'unité de séparation pour produire un gaz enrichi en hydrogène (7) et un fluide enrichi en monoxyde de carbone (17), des moyens pour envoyer au moins une partie du gaz enrichi en hydrogène au appareil de séparation par adsorption modulée en pression (PSA) opérant à une température au-dessus de 0°C pour produire un gaz riche en hydrogène (13) à une pression d'au moins 20 bars, des moyens pour envoyer au moins une partie (13A, 13) du gaz riche en hydrogène se refroidir dans l'échangeur de chaleur jusqu'à une température en dessous de -100°C, **caractérisé en ce que** l'appareil comprend une turbine de détente (T), des moyens pour envoyer l'au moins une partie du gaz riche en hydrogène refroidie se détendre dans la turbine (T) jusqu'à une pression d'au moins 8 bars et des moyens pour envoyer le gaz détendu se réchauffer dans l'échangeur de chaleur pour constituer un produit riche en hydrogène (15, 15A) à au moins 8 bars.

## Patentansprüche

1. Verfahren zur Trennung eines Gemischs (1), das Wasserstoff und Kohlenmonoxid enthält, zur Herstellung von gasförmigem Wasserstoff, bei dem:
i) das Gemisch in einem Wärmetauscher (E1) bis auf eine Temperatur unterhalb von -180 °C abgekühlt und dann bei einer Temperatur unterhalb von -100 °C durch mindestens einen Schritt der teilweisen Kondensation und/oder Destillation und/oder Waschen getrennt wird, um ein mit Wasserstoff angereichertes Gas (7) und ein mit Kohlenmonoxid angereichertes Fluid (17) herzustellen,
ii) mindestens ein Teil des mit Wasserstoff angereicherten Gases einer bei einer Temperatur oberhalb von 0 °C arbeitenden Vorrichtung zur Trennung durch Druckwechseladsorption (PSA) zugeführt wird, um ein wasserstoffreiches Gas (13) bei einem Druck von mindestens 20 bar herzustellen, und
iii) mindestens ein Teil (13A, 13) des wasserstoffreichen Gases in einem Wärmetauscher bis auf eine Temperatur unterhalb von -100 °C abgekühlt wird,
**dadurch gekennzeichnet, dass** mindestens ein Teil des abgekühlten wasserstoffreichen Gases in einer Turbine (T) bis auf einen Druck von mindestens 8 bar entspannt und in dem Wärmetauscher wieder erwärmt wird, um ein wasserstoffreiches Produkt (15, 15A) bei mindestens 8 bar zu bilden.

2. Verfahren nach Anspruch 1, wobei mindestens ein Teil des mit Wasserstoff angereicherten Gases (7) im Wärmetauscher (E1) vor der Vorrichtung zur Trennung durch Adsorption (PSA) erwärmt wird.

3. Verfahren nach Anspruch 1 oder 2, wobei das mit Wasserstoff angereicherte Gas (7) aus Schritt ii) bei mindestens 51 bar vorliegt und das wasserstoffreiche Gas (13), das durch die Vorrichtung zur Trennung durch Adsorption (PSA) hergestellt wird, bei mindestens 50 bar vorliegt und durch die Turbine bis auf einen Druck von mindestens 20 bar entspannt wird.

4. Verfahren nach Anspruch 3, wobei das bis auf einen Druck von mindestens 20 bar entspannte wasserstoffreiche Gas zweigeteilt wird und nur ein Teil (15A) des Gases nach seiner Wiedererwärmung im Wärmetauscher auf einen Druck von höchstens 12 bar entspannt wird.

5. Verfahren nach Anspruch 1 oder 2, wobei das mit Wasserstoff angereicherte Gas (7) aus Schritt ii) bei zwischen 28 und 32 bar vorliegt und das wasserstoffreiche Gas (13), das durch die Vorrichtung zur Trennung durch Adsorption (PSA) hergestellt wird, bei zwischen 27 und 31 bar vorliegt und zumindest teilweise durch die Turbine bis auf einen Druck von 12 bar entspannt wird.

6. Verfahren nach Anspruch 5, wobei das bis auf einen Druck von 12 bar entspannte Gas das wasserstoffreiche Produkt (15) des Verfahrens bildet.

7. Verfahren nach einem der vorhergehenden Ansprüche, wobei das in dem Wärmetauscher (E1) abgekühlte Gemisch (1) bei mindestens 50 bar vorliegt.

8. Verfahren nach einem der vorhergehenden Ansprüche, wobei das Gemisch (1) in einem ersten Schritt der teilweisen Kondensation getrennt wird, dass Gas (3) aus dem ersten Schritt der teilweisen Kondensation abgekühlt und einem zweiten Schritt der teilweisen Kondensation zugeführt wird und das in der Turbine (T) entspannte wasserstoffreiche Gas (15) durch Wärmetausch mit dem Gas aus dem ersten Schritt der teilweisen Kondensation, welches abgekühlt wird, wieder erwärmt wird.

9. Verfahren nach Anspruch 8, wobei die Eintrittstemperatur der zweiten teilweisen Kondensation unter -200 °C oder sogar -203 °C liegt.

10. Verfahren nach einem der vorhergehenden Ansprüche, wobei ein mit Wasserstoff angereicherter Strom (9) aus einer externen Quelle ebenfalls in der Apparatur zur Trennung durch Druckwechseladsorption (PSA) getrennt wird, gegebenenfalls derart, dass der in der Turbine (T) entspannte Strom (15) größer ist als der Strom von bei der Temperatur unterhalb von -100 °C abgetrenntem mit Wasserstoff angereichertem Gas (7).

11. Verfahren nach einem der vorhergehenden Ansprüche, wobei die Temperatur des Gases (15) am Ausgang der Turbine (T) unter -200 °C oder sogar -203 °C liegt.

12. Apparatur zur Trennung eines Gemischs (1), das Wasserstoff und Kohlenmonoxid enthält, zur Herstellung von gasförmigem Wasserstoff, umfassend eine Trenneinheit, in der mindestens ein Schritt der teilweisen Kondensation und/oder Destillation und/oder Waschen (S1, S2) erfolgt, einen Wärmetauscher (E1), eine Apparatur zur Trennung durch Druckwechseladsorption (PSA), Mittel zum Zuführen des bis auf eine Temperatur unterhalb von -180 °C abzukühlenden Gemischs zum Wärmetauscher (E1), Mittel zum Zuführen des abgekühlten, bei einer Temperatur unterhalb von -100 °C durch einen Schritt der teilweisen Kondensation und/oder durch Destillation und/oder durch Waschen in einer Trenneinheit zu trennenden Gemischs, um ein mit Wasserstoff angereichertes Gas (7) und ein mit Kohlenmonoxid angereichertes Fluid (17) herzustellen, Mittel zum Zuführen mindestens eines Teils des mit Wasserstoff angereicherten Gases zu einer bei einer Temperatur oberhalb von 0 °C arbeitenden Vorrichtung zur Trennung durch Druckwechseladsorption (PSA), um ein wasserstoffreiches Gas (13) bei einem Druck von mindestens 20 bar herzustellen, Mittel zum Zuführen mindestens eines Teils (13A, 13) des in dem Wärmetauscher bis auf eine Temperatur unterhalb von -100 °C abzukühlenden wasserstoffreichen Gases,
**dadurch gekennzeichnet, dass** die Apparatur eine Entspannungsturbine (T), Mittel zum Zuführen mindestens eines Teils des in der Turbine (T) bis auf einen Druck von mindestens 8 bar zu entspannenden abgekühlten wasserstoffhaltigen Gases und Mittel zum Zuführen des in dem Wärmetauscher wieder zu erwärmenden entspannten Gases, um ein wasserstoffreiches Produkt (15, 15A) bei mindestens 8 bar zu bilden, umfasst.

## Claims

1. Process for the separation of a mixture (1) containing hydrogen and carbon monoxide to produce gaseous hydrogen, in which:
i) the mixture is cooled in a heat exchanger (E1) down to a temperature below -180°C and then separated at a temperature below -100°C by at least one stage of partial condensation and/or by distillation and/or by scrubbing in order to produce a gas enriched in hydrogen (7) and a fluid enriched in carbon monoxide (17),
ii) at least a part of the gas enriched in hydrogen is sent to a pressure swing adsorption separation apparatus (PSA) operating at a temperature above 0°C in order to produce a gas rich in hydrogen (13) at a pressure of at least 20 bars and
iii) at least a part (13A,13) of the gas rich in hydrogen is cooled in the heat exchanger down to a temperature below -100°C,
**characterized in that** the cooled at least a part of the gas rich in hydrogen is reduced in pressure in a turbine (T) down to a pressure of at least 8 bars and reheated in the heat exchanger in order to constitute a product rich in hydrogen (15,15A) at at least 8 bars.

2. Process according to Claim 1, in which the at least a part of the gas enriched in hydrogen (7) is reheated in the heat exchanger (E1) upstream of the adsorption separation apparatus (PSA).

3. Process according to Claim 1 or 2, in which the gas enriched in hydrogen (7) of stage ii) is at at least 51 bars, the gas rich in hydrogen (13) is produced by the adsorption separation apparatus (PSA) at at least 50 bars and it is reduced in pressure by the turbine down to a pressure of at least 20 bars.

4. Process according to Claim 3, in which the gas rich in hydrogen reduced in pressure down to a pressure of at least 20 bars is divided into two and only one part (15A) of the gas is reduced in pressure downstream of its reheating in the exchanger down to a pressure of at most 12 bars.

5. Process according to Claim 1 or 2, in which the gas enriched in hydrogen (7) of stage ii) is at between 28 and 32 bars, the gas rich in hydrogen (13) is produced by the adsorption separation apparatus (PSA) at between 27 and 31 bars and it is reduced in pressure at least in part down to a pressure of at most 12 bars by the turbine (T) .

6. Process according to Claim 5, in which the gas reduced in pressure down to a pressure of at most 12 bars constitutes the product rich in hydrogen (15) of the process.

7. Process according to one of the preceding claims, in which the mixture (1) cooled in the heat exchanger (E1) is at at least 50 bars.

8. Process according to one of the preceding claims, in which the mixture (1) is separated in a first partial condensation stage, the gas (3) from the first partial condensation stage is cooled and is sent to a second partial condensation stage and the gas rich in hydrogen (15) reduced in pressure in the turbine (T) is reheated by heat exchange with the gas from the first partial condensation stage which is cooled.

9. Process according to Claim 8, in which the temperature at the inlet of the second partial condensation is less than -200°C, indeed even than - 203°C.

10. Process according to one of the preceding claims, in which a flow (9) enriched in hydrogen from an exterior source is also separated in the pressure swing adsorption separation apparatus (PSA), optionally so that the flow reduced in pressure (15) in the turbine (T) is greater than the flow of gas (7) enriched in hydrogen separated at the temperature below -100°C.

11. Process according to one of the preceding claims, in which the temperature of the gas (15) at the turbine (T) outlet is less than -200°C, indeed even than -203°C.

12. Apparatus for the separation of a mixture (1) containing hydrogen and carbon monoxide in order to produce gaseous hydrogen, comprising a separation unit, where at least one stage of partial condensation and/or distillation and/or scrubbing (S1, S2) is carried out, a heat exchanger (E1), a pressure swing adsorption separation apparatus (PSA), means for sending the mixture to be cooled in the heat exchanger (E1) down to a temperature below -180°C, means for sending the cooled mixture to be separated at a temperature below -100°C by at least one stage of partial condensation and/or by distillation and/or by scrubbing in the separation unit in order to produce a gas enriched in hydrogen (7) and a fluid enriched in carbon monoxide (17), means for sending at least a part of the gas enriched in hydrogen to the pressure swing adsorption separation apparatus (PSA) operating at a temperature above 0°C in order to produce a gas rich in hydrogen (13) at a pressure of at least 20 bars, means for sending at least a part (13A,13) of the gas rich in hydrogen to be cooled in the heat exchanger down to a temperature below -100°C,
**characterized in that** the apparatus comprises a pressure-reducing turbine (T), means for sending the cooled at least a part of the gas rich in hydrogen to be reduced in pressure in the turbine (T) down to a pressure of at least 8 bars and means for sending the pressure-reduced gas to be reheated in the heat exchanger in order to constitute a product rich in hydrogen (15,15A) at at least 8 bars.
